(19) Europäisches Patentamt
European Patent Office
Office européen des brevets

(11) **EP 1 408 214 A2**

## (12) EUROPEAN PATENT APPLICATION

(43) Date of publication:
**14.04.2004 Bulletin 2004/16**

(51) Int Cl.7: **F02C 9/00**, G06F 17/00

(21) Application number: **03012045.5**

(22) Date of filing: **28.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.10.2002 US 268957**

(71) Applicant: **Mitsubishi Heavy Industries, Ltd. Tokyo (JP)**

(72) Inventors:
• **Tomita, Yasuoki,**
  **Mitsubishi Heavy Industries, Ltd.**
  **2-chome, Takasago-shi, Hyogo-ken (JP)**
• **Kuwabara, Masamitsu,**
  **Mitsubishi Heavy Industries**
  **2-chome, Takasago-shi, Hyogo-ken (JP)**

• **Masada, Junichiro,**
  **Mitsubishi Power Systems, Inc.**
  **Suite 1600, Miami, Florida 33156 (US)**
• **Soechting, Friedrich,**
  **c/o Mitsubishi Power Systems**
  **Suite 1600, Miami, Florida 33156 (US)**
• **Kallianpur, Vinod,**
  **Mitsubishi Power Systems, Inc.**
  **Lake Mary, Florida 32746 (US)**
• **Lee, Jun-Hee,**
  **c/o Mitsubishi Power Systems, Inc.**
  **Lake Mary, Florida 32746 (US)**

(74) Representative: **Henkel, Feiler & Hänzel**
  **Möhlstrasse 37**
  **81675 München (DE)**

(54) **A method for managing lifespans of high temperature gas turbine components**

(57) A method for managing the remaining life of a high temperature component used in a gas turbine is provided that enables a state of fatigue of a high temperature component to be evaluated and controlled with a high level of accuracy, and a program medium for performing the method for managing the remaining life of a high temperature gas turbine component on a computer. In the method for managing the lifespan of a high temperature component used in a gas turbine, the lifespan of a high temperature component being evaluated is set within an operating area bounded by a component life limit line that is determined on the basis of field data giving the correlation between the operating time and operating cycles for the state of fatigue from past high temperature components. As the program medium, a medium is employed that is provided with a program in which this method is used for managing a lifespan of a high temperature component used in a gas turbine.

FIG. 1

**Description**

BACKGROUND OF THE INVENTION

Field of the Invention

The present invention relates to a method for managing the lifespan of large industrial gas turbine components that are specifically exposed to the high combusted gas temperatures. The mechanical behavior of the superalloy materials that are typically used for those components predominantly experiences a combination of oxidation, creep and fatigue depending on the nature of the powerplant operating conditions. Due to difficulty in quantifying the nonlinear interactions between the abovementioned mechanisms, the industry has had to rely on empirical design rules to estimate the remaining life, and for setting intermediate repair or refurbishment operations. The new method proposed in this invention is able to predict cracking, and crack growth rates depending on individual powerplant operating conditions. Likewise, the new method can estimate the operating interval to reach a repair limit based on the individual powerplant operating duty cycle.

Description of the Related Invention

The high temperature gas turbine components tend to exhibit visible signs of oxidation, and cracking even at early stages of power plant operation depending on the actual type of operating conditions. In conventional (steam turbine) thermal power plants faults such as cracks are not tolerated. In an industrial gas turbine power plant faults such as cracks that are detected during a normal inspection are repaired if they are below the repair criteria, or scrapped when the repair limit is exceeded. An alternate damage tolerance design method is being introduced in which the minor faults that are below a certain standard do not have to be repaired.

The maintenance intervals for executing repair or replacement decisions continue to be based on empirical decisions. Therefore, it is difficult to apply a standardized formula for predicting the remaining life of hot components accurately. One approach that is used in the industry for estimating the various interactions and guiding repair and end-of-life replacement decisions is to apply the formula below (see equation 1).

*Nomenclature in the formula*

   **AOH** represents actual operating time;
   **EOHe** represents equivalent operating time;
   **F** represents a factor for converting start/stop cycles into an equivalent operating time

$$\text{EOHe} = \text{AOH} + \text{F} \times \text{(number of start/stop cycles)} \tag{1}$$

Decisions for executing repair, or replacing the component at its end-of-life are based on the equivalent operating time EOHe. Namely, when EOHe is less than EOHd set by design it is determined that the operation is still within the operating limit for continued safe operation. If EOHe is equal to or greater than EOHd, the component has reached its end-of-life.

Advanced industrial gas turbines make use of more sophisticated materials and coating systems that can operate at high temperatures more effectively. Therefore the overall costs of making those components, as well as intermittent repair costs over the life cycle are much higher than prior gas turbine operating experience. Additionally, more advanced inspection and repair techniques are required during the maintenance to provide accurate repair disposition, and assuring hardware integrity for further service use following the repair work. Inability to manage those decisions effectively has become a significant hurdle in the industry, as is reflected by high "fallout" or premature replacement of parts during a fraction of their originally intended service life. Likewise, there are much higher risks of secondary damage on those repaired parts particularly if the repair effort alters the airfoil geometry and inner-cooling passage integrity. Therefore, there is a very important need to improve the existing methodologies for forecasting maintenance and replacement decisions so as to maximize the life cycle capability. Presently, that is not possible with existing methods without the ability to forecast cracking and crack growth rates resulting from the specific powerplant duty cycle profile.

The present invention was conceived specifically to address the abovementioned need of being able to forecast cracking, crack growth rate, and the operating interval to a repair limit accurately for given power plant operating profiles. Using a computer the methodology and approach is also able to compute life consumption for individual components in a set, and thereby track the overall life consumption of that part by addressing overall operating and maintenance history parameters.

## SUMMARY OF THE INVENTION

The present invention was developed using field inspections data for correlating individual type of powerplant duty cycles (i.e. operating time / operating cycles) by factoring all maintenance and repair data of individual components from the fleet inspections database.

The approach utilized a statistical method, called Weibull using a procedure known as the Maximum Likelihood estimation method. The methodology can sort through the inspection records, and provides the probability of occurrence of various crack lengths from the set of components subjected to the specific powerplant operating profile. Note that the method implicitly accounts for the interactions between the "base load operating hours" and the "start/stop cyclic" operations on the cracking, and crack growth rate. Both of those are major drivers for the cracking and crack growth rates. Using the above methodology and approach it is possible to construct repair limits for the hardware.

A computer program has been developed that links data from powerplant operating history, and other pertinent factors such as maintenance and repair history for tracking the life consumption of individual components.

## BRIEF DESCRIPTION OF THE DRAWINGS

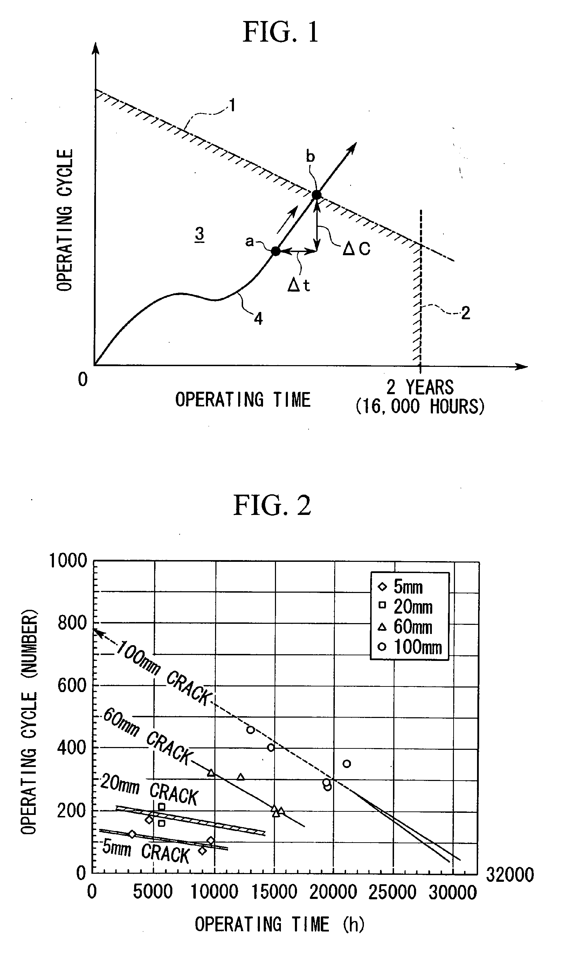

Fig. 1 graphically describes the method for managing the remaining life of high temperature components of a gas turbine in the present invention. The horizontal axis is operating time and the vertical axis is the operating start/stop cycle.

Fig. 2 shows actual example of utilizing the invented method with existing high temperature component field data. The horizontal axis is operating time and the vertical axis is the operating start/stop cycle.

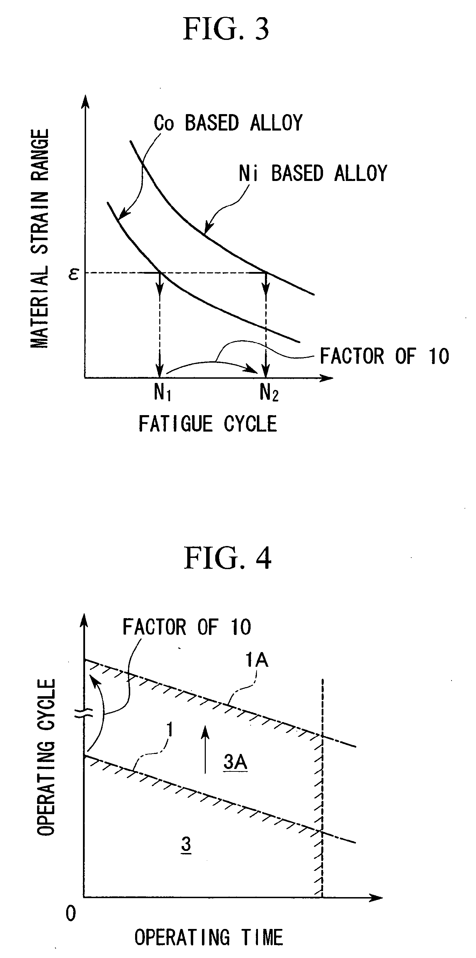

Fig. 3 graphically shows the way to extrapolate the cyclic capabilities of the existing material (Co-based superalloy) into those of new material (Ni-based superalloy). In this figure, Ni-based superalloy has 10 times higher cyclic capability than Co-based superalloy. The horizontal axis is the fatigue cycle and the vertical axis is the material strain range.

Fig. 4 graphically describes the way to increase the cyclic capability of new material relative to the existing material. In this figure, the factor of 10 is applied to the operating cycle for new material. Therefore, new boundary is established for managing the lifespan of high temperature component with newly developed material. The horizontal axis is operating time and the vertical axis is the operating start/stop cycle.

## DESCRIPTION OF THE PREFERRED EMBODIMENTS

An embodiment of the method for managing the lifespan of high temperature components of a gas turbine in the present invention and its implementation through computer program will now be described with reference to the drawings. It is to be understood that the present invention is in no way limited by this description.

Note that the term "high temperature component" of the present invention indicates the component parts of a gas turbine that are particularly exposed to a high temperature environment. The examples are the turbine rotating blades, turbine stationary blades, and the combustor components. In addition, the term "operating cycle" of the present invention indicates the sum of the number of startups to operate the gas turbine and the number of trips (i.e., sudden engine stoppages). The greater the number of engine startups and number of trips is, the greater the level of fatigue in the high temperature components is even if operating time is maintained same for a gas turbine with fewer engine startups and trips. In other words, a greater portion of the component life is consumed during frequent startups and trips.

As shown in Fig. 1 (The horizontal axis is operating time and the vertical axis is the operating cycle.), based on the method for managing the lifespan of high temperature components of a gas turbine in the present embodiment, a trapezoidal operating area 3 is formed and it is bounded by a component life limit (i.e., the limit in useful component life) line 1, which is set on the basis of field data from past components, and a maximum operating time line 2. A control method is then employed in which the operating area 3 (i.e., the portion indicated by the hatching lines) is set as the operating limit (i.e., component life) of the high temperature component that is being evaluated.

The component life limit line 1 is determined by a correlation between operating time and operating cycles based on evaluation of high temperature components having the same fatigue configuration and same fatigue dimensions. A specific example thereof is now described with reference to Fig. 2.

Because a great deal of data has already been gathered concerning fatigue conditions in past high temperature components used in other gas turbines, this data can be plotted on a graph showing operating time and operating cycle as shown in Fig. 2, and the trends in the level of fatigue can be acquired by selecting the same fatigue condition data and drawing lines with appropriate points. In other words, in Fig. 2, four lines (i.e., 5 mm, 20 mm, 60 mm, and 100 mm) are determined as a crack growth trend in the turbine blades. The abovementioned life limit line 1 is then decided by selecting one of these lines that is closest to the maximum crack length allowed by the design (for example, 100 mm).

The maximum operating time line 2 is the line set by regulation or the other factors. In this example, operating time limit of 16,000 hours is assigned.

By importing the life limit line 1 and the maximum operating time line 2 into a computer (not shown) and plotting them on the same graph as shown in Fig. 1, the boundaries of the operating area 3 are formed. Furthermore, continuously fetching and plotting operating time and operating cycle data for high temperature component by using the same computer model, as shown in Fig. 1, the state of fatigue of the high temperature component at the current time (or at an arbitrary operating time) can be determined as a position within the operating area 3, thereby enabling the state of fatigue to be monitored. Namely, by consecutively joining each of the plotted points within the operating area 3 it is possible to determine the trend in the state of fatigue of the high temperature component as a track 4.

By plotting on the same graph the trend (for example, the slope) of this track 4 and the position of the state of fatigue within the operating area 3 at the present moment make it possible to decide the subsequent operating time and operating cycle. In other words, taking the point *a* in Fig. 1 as the state of fatigue at the current point in time and keeping the operation to its present trend, the operating time $\Delta t$ and operating cycle $\Delta c$ are permitted until the point *b* is reached on the life limit line 1. Therefore, by choosing a combination of operating time and operating cycle that are within operating time *t* and operating cycle *c* and that are also appropriate for the subsequent operation of the gas turbine, it becomes possible to predict precisely the operability of the high temperature components.

Moreover, because it is possible to determine the evaluation result not as a simple numerical value, as is the case conventionally, but as a position within the operating area 3 (namely, as a fatigue position inside the total lifespan of the relevant high temperature component), it is also possible to visually perform lifespan evaluation and control.

Note that examples of a program medium that stores a program for performing the above described method for managing the lifespan of high temperature components used in gas turbines on a computer (namely, a program that first creates Fig. 1 by determining the life limit line 1 that is set on the basis of field data from past high temperature components, and then plots on Fig. 1 data of the operating time and operating cycle of the high temperature component being evaluated. Subsequently, it determines the state of fatigue at the current point in time or at an arbitrary operating time as a position within the operating area 3 that is bounded by the life limit line 1) include CD-ROM, DVD-ROM and the like. However, the examples are not limited to these and it is to be understood that other media may also be used.

The abovementioned method is applied to cases in which the high temperature component being evaluated and the high temperature component of the field data are formed from the same material. However, it is also possible for the present invention to be used in applying the method described in Figs. 3 and 4 even when the material of two components is different.

Namely, if the material of the high temperature component being evaluated is changed from a cobalt based alloy (Co-based superalloy) to a nickel based alloy (Ni-based superalloy), the ratio of the fatigue cycles at the same material strain range $\Delta \varepsilon$ is determined from general material data. The properties of the material data itself are generally known as shown in Fig. 3,

Next, if the ratio of the fatigue cycle of the nickel based alloy to the cobalt based alloy is, for example, determined to be a factor of 10, then, as shown in Fig. 4, a revision is performed to raise the component life limit line 1 by a factor of 10 in the direction of the operating cycle (i.e., in the direction of the vertical axis). By performing this type of revision, the operating area 3A is obtained and it is bounded by the new component life limit line 1A that is determined when a nickel based alloy high temperature component is used. Subsequently, by plotting the operating track of the nickel based alloy high temperature component that is being evaluated inside the operating area 3A in the same way as for the above track 4, it is possible to manage the lifespan inside the operating limit.

According to the method for managing the lifespan of a high temperature component provided in a gas turbine of the first aspect of the present invention, it becomes possible to evaluate and manage the state of fatigue/ lifespan of a high temperature component used in a gas turbine with a high level of accuracy. Moreover, it is possible to obtain the result of this evaluation not as a simple numerical value, as has been the case conventionally, but as a position within a component life limit (namely, as a fatigue position within the total lifespan of the high temperature component) so that it is possible to visually evaluate and manage the lifespan.

According to the method for managing a lifespan of a high temperature component provided in a gas turbine of the second aspect, it becomes possible to decrease the labor required for the lifespan control by monitoring the state of fatigue/ lifespan of the high temperature component using a computer.

According to the method for managing a lifespan of a high temperature component provided in a gas turbine of the third aspect, it becomes possible to set the subsequent operating time and operating cycles more accurately than a method that uses a conventional formula.

According to the method for controlling a lifespan of a high temperature component provided in a gas turbine of the fourth aspect, it becomes possible to perform lifespan control when different materials are employed for the same high temperature component based on field data.

According to the program medium of the fifth aspect of the present invention, because it is possible to determine the state of fatigue of a high temperature component being evaluated based on field data of past high temperature components used in actual operations, it becomes possible to evaluate and manage the state of fatigue/ lifespan of a high temperature component used in a gas turbine with a high level of accuracy. Moreover, because it is possible to obtain the result of this evaluation not as a simple numerical value, as has been the case conventionally, but as a position within a use limit (namely, as a fatigue position within the total lifespan of the high temperature component), it becomes possible to visually evaluate and control the lifespan.

**Claims**

1. A method for managing a lifespan of a high temperature component provided in a gas turbine, wherein a lifespan of the high temperature component being evaluated is set within a component life limit that is determined based on field data giving a correlation between operating time and operating cycles for the states of fatigue from past high temperature components.

2. The method for managing a lifespan of a high temperature component provided in a gas turbine according to claim 1, wherein the life limit and data on the operating time and operating cycle of the high temperature component are imported into a computer, and a state of fatigue of the high temperature component at an arbitrary operating time is monitored by determining this state of fatigue as a position relative to the life limit.

3. The method for managing a lifespan of a high temperature component provided in a gas turbine according to claim 1 or 2, wherein a state of fatigue of the high temperature component within an operating area bounded by the life limit is determined as a track, and a subsequent operating time and operating cycle is decided based on a trend of this track and on a position of the high temperature component within the operating area at the current point in time.

4. The method for managing a lifespan of a high temperature component provided in a gas turbine according to any of claims 1 to 3, wherein, when the past component is formed from a different material from the high temperature component, the life limits of the two materials are revised based on a ratio of fatigue cycles in order to obtain the same material distortion.

5. A computer program for managing the lifespan of a high temperature component in a gas turbine, wherein said program
   refers to operating time and operating cycle data of the high temperature component and a component life limit set on a basis of field data, said component life limit being based on a correlation between operating time and operating cycles for fatigue crack from past high temperature components;
   determines a state of fatigue of the high temperature component at an arbitrary operating time as a position within an operating area bounded by the life limit.

# FIG. 1

# FIG. 2

6

# FIG. 3

# FIG. 4